Europäisches Patentamt

(19) European Patent Office

Office européen des brevets

(11) Veröffentlichungsnummer: **0 152 936**
**B1**

(12) **EUROPÄISCHE PATENTSCHRIFT**

(45) Veröffentlichungstag der Patentschrift:
13.07.88

(21) Anmeldenummer: **85101722.8**

(22) Anmeldetag: **16.02.85**

(51) Int. Cl.⁴: **F 16 H 57/12**

(54) **Mechanischer Drehantrieb.**

(30) Priorität: **21.02.84 DE 3406262**

(43) Veröffentlichungstag der Anmeldung:
**28.08.85 Patentblatt 85/35**

(45) Bekanntmachung des Hinweises auf die Patenterteilung:
**13.07.88 Patentblatt 88/28**

(84) Benannte Vertragsstaaten:
**AT BE CH DE FR GB IT LI NL SE**

(56) Entgegenhaltungen:
**EP - A - 0 041 136**
**EP - A - 0 121 063**
**DE - A - 3 115 061**

**PATENT ABSTRACTS OF JAPAN, Band 6, Nr. 207, 19.**
**Oktober 1982, Seite (M-165) (1085)**
**idem**
**SOVIET INVENTIONS ILLUSTRATED Derwent**
**Publications Ltd., Section Mechanical, Woche C48,**
**Zusammenfassung Nr. L5313, Q 64, 14. Januar 1981**

(73) Patentinhaber: **EKE Robotersysteme GmbH, Tegernseer**
**Landstrasse 161, D-8000 München 90 (DE)**

(72) Erfinder: **Beyer, Hasso, Kreuzeckstrasse 9,**
**D-8900 Augsburg (DE)**

(74) Vertreter: **Goddar, Heinz J., Dr. et al, FORRESTER &**
**BOEHMERT Widenmayerstrasse 4/I,**
**D-8000 München 22 (DE)**

## Beschreibung

Die Erfindung betrifft einen mechanischen Drehantrieb, vorzugsweise Untersetzungsantrieb, insbesondere für Industrieroboter, beispielsweise Manipulatorarmdrehantrieb, mit einer Antriebs- und einer Abtriebsseite, einer Antriebswelle und mindestens zwei über die Antriebswelle miteinander gekoppelten und darauf angeordneten, gegeneinander verspannten Getrieben, vorzugsweise Untersetzungsgetrieben, die auf ihrer Abtriebsseite mit dem Abtriebselement gekoppelt sind.

Bei Industrierobotern, Manipulatoren und dergleichen, ist man bestrebt, von einem Aufstellungsort des Industrieroboters bzw. des Manipulators aus in einem möglichst grossen räumlichen Bereich Arbeitspunkte erreichen können. Insbesondere von mehrachsigen, beispielsweise 6achsigen Manipulatoren wird auch verlangt, Operationen an Werkstücken auszuführen, die in bezug auf den Standort des Manipulators eine hinterschnittene Form aufweisen, wobei gleichzeitig eine hohe wiederholbare Positioniergenauigkeit gefordert ist. Ein wesentliches Problem bei der Erreichung der geforderten wiederholbaren Positioniergenauigkeit ist in den Drehantrieben der Manipulatorachsen vorhandenes Spiel, das sich mit der Anzahl der Achsen summiert und über die Ausladung der Manipulatorarme übersetzt wird.

Bei einem bekannten Drehantrieb der eingangs genannten Art (vergleiche DE-OS 3 115 061) sind die Getriebe zur Erreichung einer möglichst spielfreien Untersetzung auf der Antriebsseite über die Antriebswelle torsionselastisch verbunden und auf der Abtriebsseite unmittelbar mit dem über das Getriebe in Drehbewegung versetzbaren Manipulatorarm verbunden, der torsionssteif ausgeführt ist, so dass insgesamt auf der Abtriebsseite eine torsionssteife Kopplung der Untersetzungsgetriebe gegeben ist. Die torsionselastische Kopplung der Getriebe auf der Antriebsseite des Drehantriebs ist mit dem Nachteil verbunden, dass insbesondere bei einseitigem Antrieb des Drehantriebs Bewegungsgleichförmigkeiten in Abhängigkeit von der Drehrichtung auftreten, die in bezug auf die Positioniergenauigkeit zu unerwünscht grossen Schwankungen führen. Diesem Nachteil kann man zwar dadurch begegnen, dass man die Drehmomentseinleitung auf die Antriebswelle mittig vorsieht, was jedoch insbesondere bei einem Industrieroboter zu konstruktiv relativ aufwendigen Lösungen führt und auch in bezug auf Wartungsfreundlichkeit nachteilig ist. Um gleichwohl einen einseitigen Antrieb der Antriebswelle vorzusehen, muss daher die Antriebswelle in besonderer Weise ausgestaltet sein, um bei beiden Drehrichtungen einen jeweils gleichen, in bezug auf die Untersetzungsgetriebe wirksamen Torsionswinkel einzustellen.

Weiterhin ist im Stand der Technik (vergleiche Patent Abstracts of Japan, Band 6, Nr. 207, 19.10.82, JP-A 57 114 051) bekannt geworden, bei Drehantrieben der eingangs genannten Art die Getriebeverspannung durch konstruktive Massnahmen im Inneren der beiden gegeneinander verspannten Getriebe herbeizuführen.

Ausgehend von dem zunächst aufgezeigten Stand der Technik liegt der Erfindung daher die Aufgabe zugrunde, einen mechanischen Drehantrieb, insbesondere für einen Industrieroboter, anzugeben, mit dem eine hohe Positioniergenauigkeit erreichbar ist, der aber gleichwohl konstruktiv möglichst einfach aufgebaut und auch möglichst kostengünstig herstellbar ist.

Die zuvor aufgezeigte Aufgabe ist erfindungsgemäss zunächst im wesentlichen dadurch gelöst, dass die antriebsseitige Kupplung torsionssteif ist und die Getriebeverspannung auf der Abtriebsseite über eine torsionselastische Kupplung zwischen den Getriebeausgangsseiten und dem Abtriebselement durchgeführt ist.

Die erfindungsgemässe Massnahme, der Getriebeverspannung auf der Abtriebsseite torsionselastisch auszuführen, führt zu dem überraschenden Vorteil, dass hier konstruktiv sehr einfache Massnahmen zu dem gewünschten Ergebnis führen. Auf der Abtriebsseite ist eine symmetrische Abgabe des auf der Antriebsseite eingeleiteten Drehmoments nicht mehr problematisch, da die Drehmomentaufteilung auf der Antriebsseite vorgenommen ist und abtriebsseitig bei beiden Untersetzungsgetrieben das gleiche Drehmoment ansteht, bei praktisch gleichen Verdrehwinkeln der Antriebswelle unabhängig von der Drehrichtung der Antriebswelle. Da sonach von der Antriebswelle mit Ausnahme der Torsionssteifigkeit keine besonderen Anforderungen zu erfüllen sind, kann als Antriebswelle ein insbesondere werkstoffmässig und fertigungsmässig einfaches und damit kostengünstiges Maschinenteil Verwendung finden.

Wie auch zuvor schon angedeutet, ist in Ausgestaltung der Erfindung vorgesehen, dass die Antriebswelle einseitig mit einem Antriebsdrehmoment beaufschlagt wird. In konkreter Realisierung kann beispielsweise ein einseitig mit der Antriebswelle verbundener Antriebsmotor vorgesehen sein, oder aber kann der Drehmoment über eine Kraftübertragung mittels eines Zahnriemens eingeleitet werden, wozu auf der Antriebswelle noch ein entsprechendes Antriebsritzel vorgesehen ist.

Die aufgezeigte, der Erfindung zugrundeliegende Aufgabe lässt sich in besonders vorteilhafter Weise dadurch lösen, dass als Untersetzungsgetriebe ein Harmonic-Drive-Getriebe verwendet wird. Harmonic-Drive-Getriebe sind als solche im Stand der Technik bekannt, wozu lediglich beispielsweise auf «Gear Handbook», 1st Edition, McGraw-Hill Book Company, Inc., 1962, Seiten 3-35 bis 3-44, verwiesen wird. Derartige Harmonic-Drive-Getriebe weisen als wesentliche Elemente einen innenverzahnten starren Ring (circular spline), einen aussenverzahnten flexiblen Zylinder (flexspline) und einen elliptischen Innenkörper auf. Grundsätzlich kann bei einem Harmonic-Drive-Getriebe, wenn der elliptische Innenkörper mit der Antriebsseite verbunden ist, abtriebsseitig der flexspline festgehalten sein und der circular spline sich bewegen, wie auch der circular spline festgehalten sein und der flexspline sich bewegen kann. Im Rahmen der vorliegenden Erfindung wird bevorzugt der circular spline festgehalten und an dem flexspline das Abtriebsmoment abgenommen. Damit wird die Eigenschaft des Harmonic-Drive-Getriebes genutzt, dass mit dem flexspline, der von der Eigenart des Getriebes her als flexibles Bauteil ausgelegt ist, ein torsionselastisches Element zur Verfügung steht.

Die Verspannung der Untersetzungsgetriebe kann in einfacher Weise dadurch durchgeführt werden, dass die Antriebsräder bzw. die elliptischen Innenkörper auf der Antriebswelle gegeneinander verdreht werden. Besondere Massnahmen zur Verspannung der Getriebe gegeneinander sind damit nicht erforderlich.

Im folgenden wird die Erfindung noch anhand einer lediglich ein Ausführungsbeispiel darstellenden Zeichnung näher erläutert, auf der zeigt

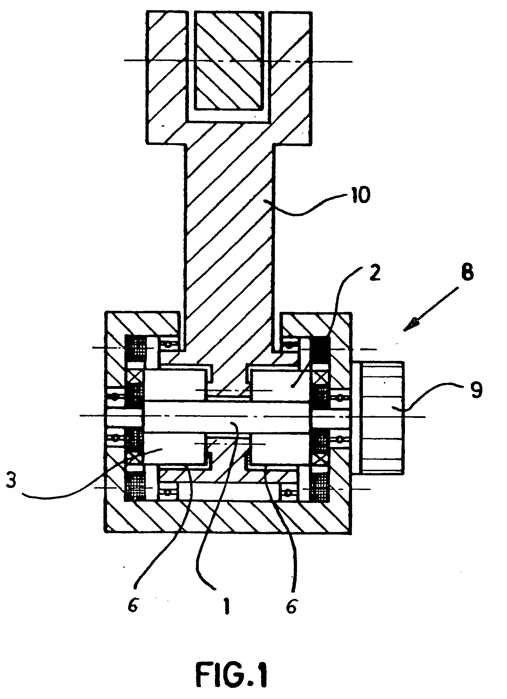

Fig. 1 eine prinzipielle Darstellung eines erfindungsgemässen Drehantriebes und

Fig. 2 eine teilweise Ansicht eines erfindungsgemässen Drehantriebes in grösserer konstruktiver Einzelheit.

Dargestellt und beschrieben ist ein im ganzen mit 8 bezeichneter mechanischer Drehantrieb, mit dem bei dem gezeigten Ausführungsbeispiel durch ein über einen Antriebsmotor 9 aufgebrachtes Drehmoment über die Untersetzungsgetriebe 2 und 3 ein Manipulatorarm 10 rotatorisch bewegt wird.

Antriebsseitig, also über die Antriebswelle 1 sind die Untersetzungsgetriebe 2, 3 torsionssteif und abtriebsseitig über die Hohlwellen 6 torsionselastisch miteinander gekoppelt, so dass sich im Verspannungszustand die vorstehend näher erläuterten Vorteile ergeben.

Die Antriebswelle 1 ist im Rahmen der vorliegenden Erfindung ein einfaches Serienbauteil, das sich lediglich durch eine hohe Torsionssteifigkeit auszeichnet.

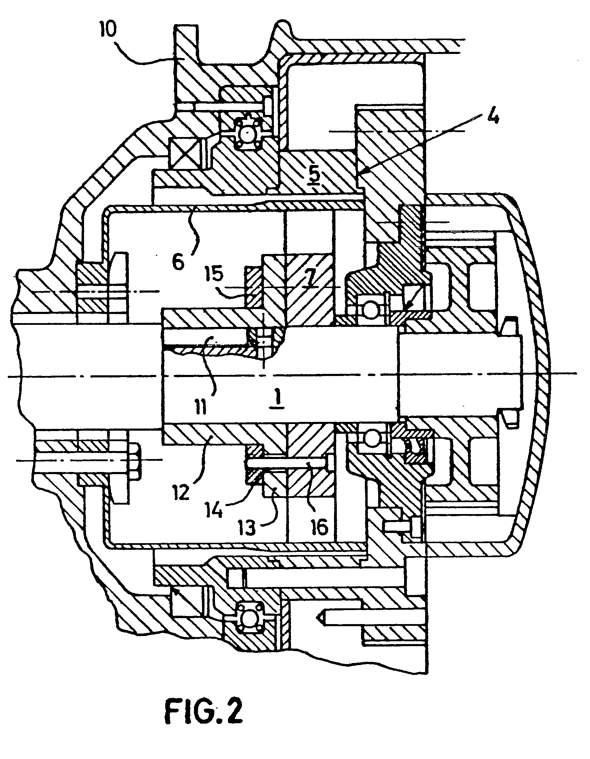

Wie in Fig. 2 in grösserer Einzelheit zu erkennen ist, sind bei dem Ausführungsbeispiel die Untersetzungsgetriebe 2 bzw. 3 als Harmonic-Drive-Getriebe 4 ausgestaltet, die als wesentliche Elemente einen innenverzahnten Ring bzw. circular spline 5, einen aussenverzahnten flexiblen Zylinder bzw. flexspline 6 und einen elliptischen Innenkörper 7 aufweisen. Der flexspline 6 ist zur abtriebsseitigen Übertragung der Drehmomente ausgenutzt, wodurch sich die beschriebene torsionselastische Kopplung zwischen dem Manipulatorarm 10 und dem Harmonic-Getriebe 4 ergibt.

Der elliptische Innenkörper 7 kann auf der Antriebswelle 1 verdreht und in beliebiger Stellung gegen eine ortsfest über eine Passfeder 11 auf der Antriebswelle 1 vorgesehene Feststellhülle 12 arretiert werden, womit die angesprochene Verspannung der Untersetzungsgetriebe 2, 3 gegeneinander in einfacher Weise durchzuführen ist.

Besonders bevorzugt ist vorgesehen, dass eine Nabe 13 der Feststellhülse 12 mit bspw. zwei kreisbogenförmigen Langlöchern 14 versehen ist, und zusätzlich eine Klemmscheibe 15 vorgesehen ist, mit deren Hilfe dann die Feststellhülse 12 bzw. die Nabe 13 der Feststellhülse 12 reibschlüssig mit Hilfe etwa einer Verspannungsschraube 16 gegenüber dem elliptischen Innenkörper 7 gehaltert werden kann.

## Patentansprüche

1. Mechanischer Drehantrieb, vorzugsweise Untersetzungsantrieb, insbesondere für Industrieroboter, beispielsweise Manipulatordreharmantrieb, mit einer Antriebs- und einer Abtriebsseite, eine Antriebswelle (1) und mindestens zwei über die Antriebswelle miteinander gekoppelten und darauf angeordneten, gegeneinander verspannten Getrieben (2, 4), vorzugsweise Untersetzungsgetrieben, die auf ihrer Abtriebsseite mit dem Abtriebselement (10) gekoppelt sind, dadurch gekennzeichnet, dass die antriebsseitige Kopplung (1) torsionssteif ist und die Getriebeverspannung auf der Abtriebsseite über eine torsionselastische Koppelung (6) zwischen den Getriebeausgangsseiten und dem Abtriebselement (10) durchgeführt ist.

2. Drehantrieb nach Anspruch 1, dadurch gekennzeichnet, dass die Antriebswelle (1) einseitig mit einem Antriebsdrehmoment beaufschlagt ist.

3. Drehantrieb nach einem der Ansprüche 1 oder 2, dadurch gekennzeichnet, dass als Untersetzungsgetriebe (2, 3) ein Harmonic-Drive-Getriebe (4) verwendet ist, mit einem innenverzahnten starren Ring (circular spline) (5), einem aussenverzahnten flexiblen Zylinder (flexspline) (6) und einem elliptischen Innenkörper (7), und dass der flexspline (6) zur abtriebsseitigen torsionselastischen Ankopplung dient.

4. Drehantrieb nach einem der Ansprüche 1 bis 3, dadurch gekennzeichnet, dass die Verspannung der Getriebe (2, 3) durch Verdrehen der Antriebsräder bzw. der elliptischen Innenkörper (7) auf der Antriebswelle (1) durchzuführen ist.

5. Drehantrieb nach einem der Ansprüche 1 bis 4, dadurch gekennzeichnet, dass eine Klemmscheibe (15) vorgesehen ist und eine Nabe (13) der Feststellhülse (12) mit mindestens einem kreisbogenförmigen Langloch (14) versehen ist, und dass die Verspannung der Getriebe (2, 3) durch reibschlüssige Festsetzung der Nabe (13) mittels einer Verspannungsschraube (16) od. dgl. durchzuführen ist.

## Claims

1. A mechanical rotation-transmitting drive, preferably a reduction drive, more particularly for industrial robots, for example, a drive for rotating manipulator arms, the drive having an input end and an output end, an input shaft (1) and at least two transmissions (2, 4), preferably reduction transmissions, which are interconnected by way of, and disposed on, the input shaft and which are preloaded relatively to one another and which are coupled at their output end to the output element (10), characterised in that the coupling (1) on the input side is torsionally rigid and the preloading on the output side is by way of a torsionally resilient coupling (6) between the output ends of the transmission and the output element (10).

2. A drive according to claim 1, characterised in that the input shaft (1) has a driving torque applied to one end.

3. A drive according to claim 1 or 2, characterised in that the reduction gearing (2, 3) is in the form of a harmonic drive transmission (4) having a rigid internally toothed ring or circular spline (5), a flexible externally toothed cylinder or flex spline (5) and an elliptical inner member (7), and the flex spline (6) is operative to provide the torsionally resilient coupling on the output side.

4. A drive according to any of claim 1–3, characterised in that the preloading of the transmissions (2, 3) is effected by turning the input wheels or elliptical inner members (7) in the input shaft (1).

5. A drive according to any of claims 1–4, characterised in that a clamping disc (15) is provided and a hub (13) of a locating sleeve (12) is formed with at least one arcuate slot (14), and the preloading of the transmissions (2, 3) is effected by frictional location of the hub (13) by means of a preloading screw (16) or the like.

**Revendications**

1. Mécanisme d'entraînement en rotation, de préférence mécanisme réducteur, en particulier pour robots industriels, par exemple entraînement de bras tournant de manipulateur, présentant un côté menant et un côté mené, un arbre menant (1) et au moins deux engrenages (2, 4), de préférence engrenages réducteurs, accouplés l'un à l'autre par l'intermédiaire de l'arbre menant et montés sur lui, haubanés l'un à l'autre, et qui sont accouplés par leur côté mené à l'élément mené (10) caractérisé par le fait que l'accouplement (1) côté mené est rigide en torsion et l'haubannage des engrenages, du côté mené, est effectué, par l'intermédiaire d'un accouplement (6) élastique en torsion, entre le côté sortie d'engrenages et l'élément mené (10).

2. Mécanisme d'entraînement en rotation selon la revendication 1, caractérisé par le fait que l'arbre menant (1) est soumis d'un côté à un couple d'entraînement.

3. Mécanisme d'entraînement en rotation selon l'une des revendication 1 ou 2, caractérisé par le fait qu'est utilisé comme engrenages réducteurs (2, 3) un système d'engrenages «Harmonic-Drive» (4), comportant un anneau rigide à denture intérieure (circular spline) (5), un cylindre flexible à denture extérieure (flexspline) (6) et un corps intérieur (7) elliptique, et le «flexspline» (6) sert d'accouplement élastique en torsion, côté mené.

4. Mécanisme d'entraînement en rotation selon l'une des revendications 1 à 3, caractérisé par le fait que l'haubanage des engrenages (2, 3) est effectué par torsion de la roue menante ou du corps intérieur elliptique (7) sur l'arbre menant (1).

5. Mécanisme d'entraînement en rotation selon l'une des revendication 1 à 4, caractérisé par le fait qu'il est prévu un disque de calage (15) et un moyeu (13) du manchon de blocage (12) est muni d'au moins un trou oblong (14) en forme d'arc de cercle, et l'haubanage des engrenages (2, 3) est effectué par fixation à friction du moyeu (13) au moyen d'une vis d'haubanage (16) ou l'analogue.

FIG.1

FIG.2